(19) Europäisches Patentamt
European Patent Office
Office européen des brevets

(11) **EP 4 180 888 A1**

(12) **EUROPEAN PATENT APPLICATION**

(43) Date of publication:
**17.05.2023 Bulletin 2023/20**

(51) International Patent Classification (IPC):
**G05B 23/02** *(2006.01)* **G06N 20/00** *(2019.01)*

(21) Application number: **21207808.3**

(52) Cooperative Patent Classification (CPC):
**G05B 23/0283; G06N 20/00**

(22) Date of filing: **11.11.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Klos, Hans-Henning**
  **91249 Weigendorf (DE)**

• **Gross, Ralf**
  **90471 Nürnberg (DE)**
• **Kohler, Benjamin**
  **90408 Nürnberg (DE)**
• **Lavrik, Vladimir**
  **63303 Dreieich (DE)**
• **Riedl, Wolfgang**
  **90408 Nürnberg (DE)**
• **Schnittger, Jens**
  **91475 Lonnerstadt (DE)**

(74) Representative: **Siemens Patent Attorneys**
**Postfach 22 16 34**
**80506 München (DE)**

(54) **METHOD AND DATA PROCESSING SYSTEM FOR PREDICTING A PRODUCTION LINE STANDSTILL TIME FOR AN INDUSTRIAL AUTOMATION ARRANGEMENT**

(57)     The proposed solution offers a method for robust prediction of time to Bottleneck standstill in a production line to optimize standstill time using Word Embedding Sums and Context Information.

The task is solved by using a dual machine learning approach. It is an advantage of the described invention, that the training tasks can easily be understood by Humans, as the tasks are formed by human readable words.

FIG 1

EP 4 180 888 A1

**Description**

In the long-term operation of any production line in industrial environment temporal hardware and/or software errors are almost unavoidable. These errors can cause a cascade of aftereffects which end up with a complete stop of a production line.

In the following, we assume that a production line has a bottleneck aggregate, which determines the throughput of the whole production line. We aim to be able to predict the possible standstill of this aggregate. The standstill of the bottleneck aggregate means a complete stop of a production line and results in a loss in productivity for the production line.

For a human it is hard to understand the interrelationship of material buffer filling levels, occurrence of machine state changes (e. g. operating, internal error, starvation, tailback), the interdependency of state changes across the production line and the timely propagation of material flow and defects in the flow. This in turn affects the equipment efficiency of the machines, that shall be high. Especially the bottleneck aggregate, which has most effect on efficiency, shall be kept in a running state. Not only for efficiency in throughput, but also because the bottleneck aggregate often has most effect on product quality.

The high complexity of the state changes and interdependencies makes it hard to predict the future states of operation of the machines in production lines. State prediction would allow to find anomalies in production and react quickly by altering the operation in such a way, that bottleneck standstills can be avoided or made more plannable.

There are several approaches how to resolve this problem and give a time interval before the production line stops:

One should have expert knowledge and be able to analyze the time diagram (e. g. a gantt chart) manually based on operating states of hardware instances. With deep domain expert knowledge and a lot of experience, one might be able to analyze the time diagram manually, based on states of aggregates and roughly predict a time to standstill of bottleneck aggregate, e. g. based on statistical analysis. Obviously, this is not feasible, since an expert would have to analyze a steady stream of aggregate state messages all the time. Additionally, situations differ and there are a lot of combinations of operating states and buffer filling levels of the conveyor belts between the aggregates, so setting up a statistical analysis is not trivial. It must be kept in mind that in real life operation, aggregate disturbances are really frequent, but most of them are transient and will not cause the line to stop.

There are some rule-based algorithms which calculate this time in semi-automatic mode with a usage of additional parameters of the hardware and production line.

One approach is described in PCT/EP2021/071128, that uses machine learning ("Employing machine learning techniques to predict production line standstills") which uses time histograms features that are built on defined operating status intervals. This approach is targeted for one specific task, whereas the proposed solution is trained more broadly and can also be applied more broadly.

In most cases, the true time to bottleneck standstill will be longer, thus also leaving more time until operator intervention must occur to prevent the standstill. Therefore, it is a valuable complement to get, in addition to a safe lower bound for the prediction, also something like a most probable estimate that generally will be substantially higher.

Therefore, it is a task for the current invention to provide a predicted time interval before the standstill of a bottleneck aggregate may occur.

This task is solved by the subject-matter of the independent patent claims.

In particular, the task is solved by using a dual machine learning approach.

Preferably, the possible statuses include at least one of Normal Operation, Internal Fault, Tailback, or Starvation. Of course, other categories are possible as well.

An example of the inventive method is disclosed with the drawings. Therein,

Figure 1 shows the general approach of the method and
Figure 2 shows a more detailed sequence of processing steps.

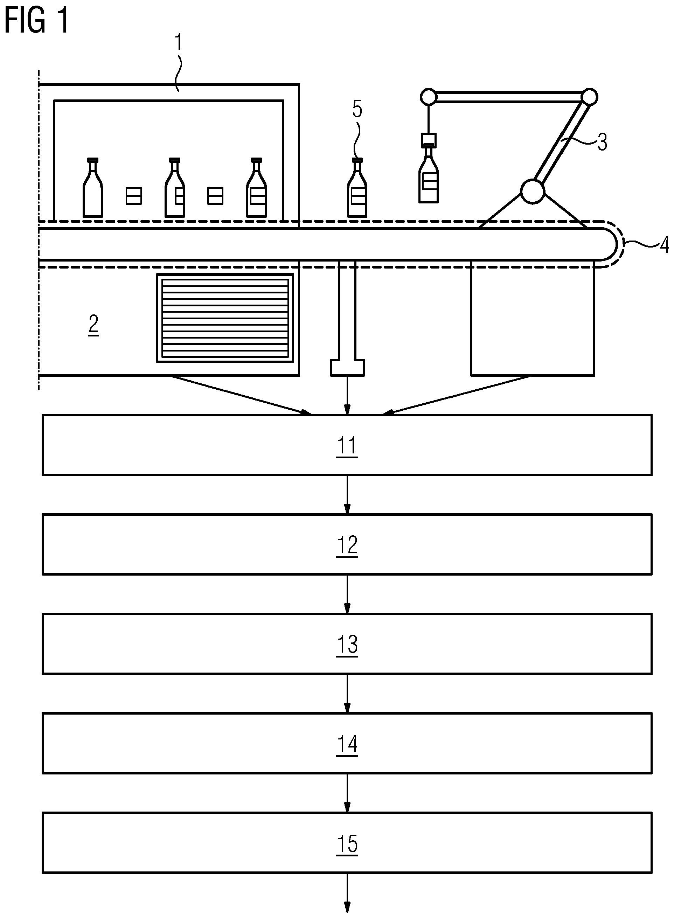

The proposed approach consists of steps which are indicated below, are depicted in Figure 1 and explained in more detail lateron.

Figure 1 shows on top an exemplary production bottling line comprising a number of coupled aggregates 1, 2, 3, 4, where there are in the bottling line exemplary aggregates could be

- Filler
- Packer
- Cartonsupply
- Blowmoulder
- Washer
- Capper

- Labeller
- Markingprinter.

In aggregate 1 the bottles that are intended to be filles are preprocessed, e. g. cleaned and labelled. In the example they are first transported on a conveyor belt 4 from a first station 1 to a second station 3 where the bottles are capped and finally packed by a second transportation means, e. g. a robotic arm.

The system shown here is, of course, only an example, which in itself is not a limitation for the claimed object. In the following it serves only to illustrate the method used.

The relevant steps of the method are first listed in key words and further below discussed in more detail.

Step 1. Data Collection:
Collection of machine states of the production line and the time between each consecutive change.

Step 2: Word Representation, Figure 1, 11 and Figure 2, 22: Translating machine status changes for each individual machine into unique "words" which form a "vocabulary" for the machines of a line. Each word may be composed of the most important information such as:

- a unique machine-ID,
- the operating state the machine was in before the actual state-change event and the state the machine went into in the event.

Further information is possible, for example the cause of a state-change event.

This step can either be performed locally, for example in an edge device, which is located directly in the vicinity or in the control cabinet of the machine. Or this could take place in the cloud, but the result would be needed on site later. The result would have to be run again, and it would only run if there is a connection to the cloud.

Step 3: Adding time distance words of relevance (e. g. 1 second to 500 seconds) into the vocabulary.

Step 4: Creating training sets for embedding training based on so called timeseries sentences 12, formed by:

a) Algorithmically created corpus of sentences for time distance embedding:

- Counting time distances upwards (one, two, three, four,...)
- Counting seconds downwards (fivehundred, fourhundredninetynine, ...)

b) Corpus of sentences composed of recorded operation state changes of the machines of a production line:

- Normal operation with very few included machine errors,
- Operation with included machine errors,
- Sentences that start with the internal error of the root-cause aggregate and end with the starvation of the filler aggregate, or
- Sentences that start with the internal error of the root-cause aggregate and end with the tailback of the last aggregate (in the named example the filler aggregate)..

Step 5: Train a first embedding model, 13 based on the training tasks starting with Step 4a and continuing with tasks in Step 4b using a machine learning model to learn temporal order and meaning of words in sentences (for example by using methods like word2vec, https://en.wikipedia.org/wiki/Word2vec AWE (Attention Word Embedding, AWEs, P&AWE-self, P&AWE-global) .

Step 6: Create Training set for the task to be achieved during operation based on the embedding-vector addition 29 of sentence traces, 14:

a) Generate a corpus of sentences with a window with a fixed length. In an advantageous embodiment of the invention, this is a sliding window. This means, the words that are put into each sentence may overlap, so part of the sentence repeats in the next generated sentence, but at least 1 word is different from one generated sentence to the next sentence. The first sentence ends with the internal error of the root-cause aggregate as its last word. The last sentence ends with the starvation or tailback word of the filler aggregate (caused by the root cause from the first sentence) as the last word of the last sentence, to represent the history of states and actions before the error occurred to be used for the training.

b) Convert all the words into their embedding vectors for all words in all sentences, using the embedding model, trained in step 5.

c) Calculate the targets to be predicted for each sentence: the time distance from the last word in each sentence to the standstill of the bottleneck aggregate

Step 7: Train a second machine learning model to predict the time to bottleneck aggregate standstill calculated in step 6c based on the input formed by the sum of all the embedding vectors from each sentence in 6b.

Step 8: Use the model in operation, 15. Each time at least one aggregate is in an internal error state, the model, that was trained in Step 7, is run once for each state change of any aggregate in the line to predict the time to the next bottleneck failure from that point in time. The input of the model is formed by the runtime data in the same fashion as in Steps 6a and 6b, using the added up embedding vectors of the sentences of the sliding window length, where the last word is the last machine operation status change.

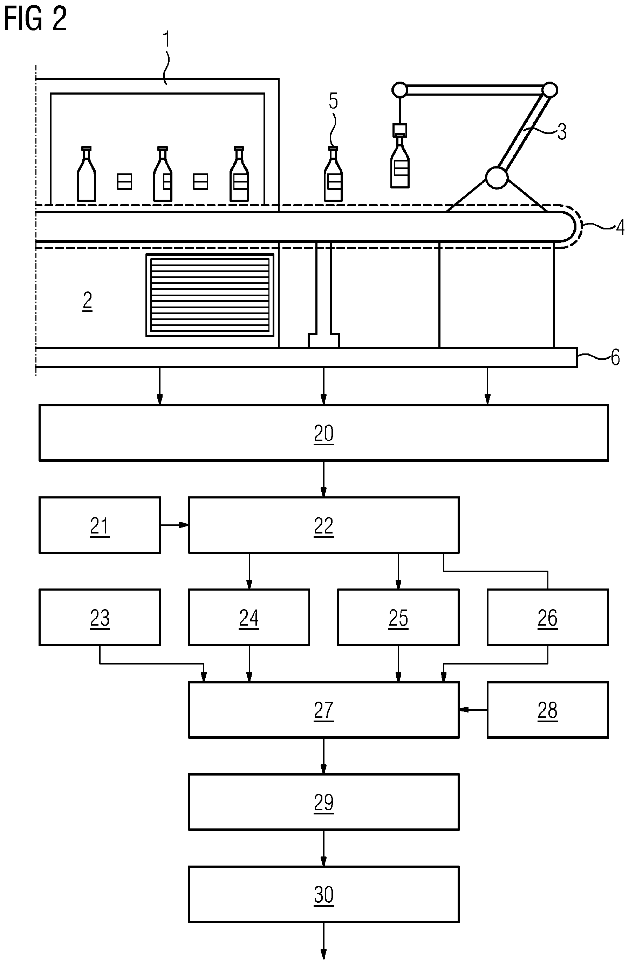

Figure 2 shows on top an exemplary production bottling line analogous to Figure 1 in more detail, comprising again a number of coupled aggregates 1, 2, 3, 4.

Step 1: Data Collection

One of the simplest and most straightforward ways to describe a state of an aggregate in a production line is to introduce discrete representations for example in descriptive natural language.

In our approach the operation state of every aggregate at a production line at a certain time can be in our example described by one out of four indicators:

1. Normal operation: the aggregate performs as expected.
2. Internal fault: an internal error occurred, which has nothing to do with the condition of the rest of the plant.
3. Tailback: a queue of workpieces (waiting for further processing) stretching back from an obstruction
4. Starvation: an "empty" aggregate waiting for workpieces.

If the aggregate experiences an internal fault (indicator "2"), it is stopped due to errors in hardware setup or software setup or a mechanical problem that might need intervention. In this case the aggregate is out of operation, which can lead to a cascade of state changes of other aggregates. Or the machine may resume operation after some time.

Some faults of machines actually originate from the supply of auxiliary or machines, in the above described example e. g. pressurized air or gas, or the resupply of caps for bottles. This error may disappear after the pressure of gas rises or the supply of caps are refilled.

The tailback state (indicator "3") means that the output buffer of the aggregate is full and that the aggregate must stop because it can no longer output material.

The starvation state (indicator "4") of an aggregate means that the input buffer of the aggregate is empty so that it stopped due to a lack of provided input material.

The standstill types relevant for the bottleneck aggregate are only starvation and tailback.

Internal faults are not due to material transport problems caused by other aggregates in the line and are therefore not predictable by a material flow analysis.

A typical example of how the dataset may look like is shown in the following Table 1.

| Time | Aggregate | State |
|---|---|---|
| 1990-06-21T00:00:00.0000 | Washer | 3 |
| 1990-06-21T00:00:13.8000 | CartonSupply | 1 |
| 1990-06-21T00:00:24.8500 | Blowmoulder | 1 |

Every row in this table represents a time, the aggregate identifier, and a state of the aggregate at this time. Only state changes matter, so the times always correspond to the time of change to the new state.

The table is populated in such a way that every time when any of aggregates changes its state, a new row will be added at the end of the table and will contain the information about

- the time when the state of the aggregate was changed,
- the identifier of the aggregate and
- the state to which the aggregate changed.

Thereby one has a full history about all the states of the aggregates during the observation time.

Step 2: Word Representation, 11, 22

Each machine state change recorded in Step 1 is translated into corresponding words by concatenation:

- a unique machine ID (e. g. name of the machine "washer" or a generated Universally Unique Identifier UUID),
- the operating state the machine was in, previous to the state change (e. g. "o" for normal operating), and

- the operating state the machine went into in the state change ("t" for tailback).

In the current example, the following words are used,

1. 'o' corresponds to "Normal operation"
2. 'e' corresponds to "Internal fault"
3. 't' corresponds to "Tailback"
4. 's' corresponds to "Starvation"

As the data recording time starts at some point where from that point on, the previous operating states are not recorded, an additional "initial" undefined operating state is introduced to represent the unknown initial state:

5. 'i' corresponds to "Initial".

The proposed step 2 results in a word representation of the state change, e. g. "washer_o_t", "cartonsupply_s_o", or "blowmoulder_s_o". "washer_o_t" means, that the washer goes from operating state to tailback state. "cartonsupply_s_o" means, that the cartonsupply goes from starvation state to operating state, and so on.

In order to build a vocabulary of all possible words, that is used later on for embedding, it is beneficial to form all possible words for each aggregate in the production line algorithmically. As there are 4 different states in this example, each aggregate has 12 words. This form of encoding has the benefit, that the size of vocabulary grows only linearly with the number of aggregates: Vocabulary_size = 12* number_of_aggregates

At the same time, the encoding holds information about the previous and the new operating state and which aggregate is currently affected in a dense description, that can be unrolled back into the original information. No information is lost.

If the operating state that the washer was previous to line 1 in Table is unknown, it can be encoded as "washer_i_t", for the second line "cartonsupply_i_o" etc., meaning the washer went from an unknown initial operating state into tailback operating state and the cartonsupply went from an unknown initial operating state into normal operation operating state. This gives a slightly larger vocabulary size:

$$\texttt{Vocabulary\_size = (12+4) * number\_of\_aggregates}$$

because each aggregate can initially come from the not recorded unknown initial state 'i' and go into one of 4 possible recorded operating states. It is not necessary to formulate words for aggregates to go into an undefined state in this setting.

Words for machine states consist of dense representation of the machine ID and both the original machine state and the new machine state. This has high positive impact on the model performance in comparison other representations.

Step 3: Adding words for discrete time distances

The data recorded in the Table in Step 1 holds information of absolute time through the absolute timestamps. These timestamps can be translated to relative timestamps by taking the difference of consecutive timestamps (rows in the table). There are typical time constants for production lines, which limit the scope of relative time of interest. For instance, the sum of all free travel times of a product through the production line can be taken as a maximum boundary for time of interest. Or the maximum delta-delay time is taken from a large dataset. Times larger than that time can be overwritten to the be represented by the maximum time set in applications where the maximum time of recorded data for real production exceeds the vocabulary of time. A resolution needs to be chosen for discretization, one second is typically appropriate for time predictions with larger buffers like found in typical filling lines.

Relative time between events means for example the time between state changes of machines, the time from the state change of a machine after a sequence of changes (end of block) to the standstill of the bottleneck unit, or the time from the state change of a machine to the next state change of this machine.

For the machine learning embedding it is beneficial to encode time in a similar manner as machine states in step 2. Each possible time-difference between consecutive datapoints is encoded by a word that represents the time in seconds by a human-readable number encoded as text:

Zero, one, two, thee, four, five, six, seven, eight, nine, ten, eleven, twelve, ... thirtyeight, ..., onehundredsixteen, ...

The word can be encoded by the num2words python library like this:

num2words(delta_time[i]).replace(",","").replace('-',"")) For counting seconds the representation is chosen to form a relationship, so that exactly one word represents one time difference and vice versa.

The word list starts at zero and goes up to the maximum time difference defined (see above).

This word list is added to the vocabulary which already holds the words from step 2

Step 4: Create Training sets for embedding model training

In order to train an embedding model 27 based on words, a corpus of sentences that are used for training and testing is typically formed. Usually this is text found in literature and easily accessible text-sources as Wikipedia. In contrast, in our case we form well-defined test sets in order to train the embedding model (such as Word2Vec, FastText, GloVe etc.) which encodes information from machine interaction in a production line through their state changes and the time behavior.

To encode time, there are different approaches, which can be applied. For example, time2vec describes a good alternative way to encode time information through a vector representation. This can also be applied here by using for instance the sine function as a base function for time2vec.

An easier, more understandable way which could follow on step 3 is described in the following.

The training set will help encode word order and thereby time-order via word embedding vector representation in Step 5.

a) Sentences of a predefined length (e. g. 7 words) are generated,

- which consist of the numbers from step 3 counted upwards one timestep (for example: one second) after the other.

From one sentence to the next, there are a few words of overlap (e. g. half the sentence). This is run through the whole vocabulary of time encoding.

['zero', 'one', 'two', 'three', 'four', 'five', 'six'] ['four', 'five', 'six', 'seven', 'eight', 'nine', 'ten'] ['eight', 'nine', 'ten', 'eleven', 'twelve', 'thirteen', 'fourteen'] ...

or

- which consist of the numbers from Step 3 counted downwards one step / second after the other.

From one sentence to the next, there are a few words of overlap. This runs through the whole vocabulary of time encoding.

b) Sentences based on recorded operation state changes of the aggregates 1, 2, 3, 4 (machines) of a production line are formed. A sentence consists of words from the vocabulary of Step 2 and Step 3.

The order is defined by state-change, time-difference (between the state changes), next state-change, next time-difference etc.

Below is an example how a collection of words could look like: First information of aggregate and first state and second state, and in the respective second line the corresponding time information.

```
'packer_o_s',
'zero',
'packer_s_o',
'zero',
'cartonsupply_t_o',
'two',
'cartonsupply_o_t',
'one',
'cartonsupply_t_o',
'two',
'cartonsupply_o_t',
'one',
'cartonsupply_t_o',
'two',
'cartonsupply_o_t',
'one',
'cartonsupply_t_o',
'two',
'cartonsupply_o_t',
'one',
'cartonsupply_t_o',
```

```
'two',
'cartonsupply_o_t',
'zero',
...
```

The length of each sentence can be set to a fixed number that is large enough to be able to capture the time state-change behavior of the production line, e. g. 30 words (=hyperparameter). Multiple of these sentences form a text-corpus that can be used in the next step for training, based on information collected like in Table 1 depicted above.

The training phase goes then as follows:

i) Find sections in Table 1, where there are few or no bottleneck aggregate standstills over a longer time (longer than one sentence of 30 words). Create sentences of fixed length by sampling though the dataset to form a training corpus for these sections in time. Training data taken from the normal operation of the production line may include defective data.

ii) Find sections in Table 1, where there are distinct sequences of internal errors ("e") for the machines, independent which type of machine is used, to learn about what happens after an error occured in a machine. Create sentences of fixed length by sampling though the dataset to form a training corpus for these sections in time. Build sentences of fixed length (hyperparameter, e. g. 30 words), where at least one machine goes into an internal error state.

iii) Build "starvation" sentences that start with the internal error ("e") of the root-cause aggregate and end with the starvation ("s") of the filler aggregate ("Filler"). The length will be dependent on each case.

iv) Build "tailback" sentences that start with the internal error ("e") of the root-cause aggregate and end with the tailback ("t") of the filler aggregate ("Filler"). The length will be dependent on each case.

Step 5: Training of embedding

Train a first embedding model based on the training tasks: starting with Step 3a and continuing with tasks in Step 3b using a machine learning model to learn temporal order and meaning of words in sentences. That training could be for example executed with one of the following programs: word2vec, AWE, AWEs, P&AWE-self, P&AWE-global.

In Figure 2, several training tasks are depicted that could be executed in parallel:

Time Training Tasks, 23
Normal Operation Training Tasks, 24
Starvation Training Tasks, (the critical aggregate goes into starvation) 25 and
Tailback Training Tasks, 26 that could be trained seperately. Further Context Information, 28 might be considered.

Some non-restictive examples for context information are

- the workers shift: different behavior with different line operators due to different operation,
- time of day, or
- the temperature: at higher temperature there might be less friction in the plant and therefore different transport times or error scenarios or different behavior of the operators).

The embedding is used to train the temporal and semantic meaning in the sentences supplied by the training sets. Models that can capture temporal aspects are beneficial to the "basic" set of words and skip-gram models. Especially models incorporating attention as a mechanism to embed interrelationship of words in sentences are beneficial as AWE, APEs etc. versus the simple word2vec approach.

Hyperparameter tuning can be used to find good hyperparameters. A simple algorithm for tuning is Gridsearch.

There are also more complicated algorithms like particle swarm optimization (PSO).

Examples of hyperparameters are number of words in one sentence used for training the word embeddings or a compression factor, which will be explained later.

In order to find an optimum for the second model in Step 7, hyperparamer tuning can be run in a loop across step 5 and step 7 together. Alternatively, more advanced techniques as particle swarm or evolutionary optimization are applicable to find good hyperparameters as well.

Compression in embedding space by vector addition within the second training task to reduce model size

Step 6: Create at least one Training set for the prediction task

Create a Training set for the task can be achieved during operation based on the embedding-vector addition of sentence-embedding traces:

a) Generate a corpus of sentences with a sliding window with a fixed length. The first sentence ends with the internal error of the root-cause aggregate as its last word. The last sentence ends with the starvation or tailback word of the filler aggregate (caused by the root cause from the first sentence) as the last word of the last sentence.
b) Convert all the words into their embedding vectors for all words in all sentences.
c) Calculate the targets to be predicted for each sentence: the time distance from the last word in each sentence to the standstill of the bottleneck aggregate.

Step 7: Train a second machine learning model to predict time to bottleneck aggregate standstill

Train a second machine learning model to predict the time to bottleneck aggregate standstill Step 6c based on the input formed by the sum of all the embedding vectors from each sentence in Step 6b.
The sum of the embedding vectors can be used instead of inputting all vectors in parallel, in order to compress the information by taking advantage of the embedding space.
Another advantageous variation of the disclosed method is achieved through the (mathematical) addition of embedding vectors, to reduce the input size of the second model. Hereby the embedding model plays out a special strength. If the compression leads to a decrease in performance, pairs of embedding vectors can be added to form new input vectors for the model instead of adding all vectors up in one single vector sum. This can be represented by the compression factor hyperparameter which scales from 0 to 1:

0: no compression, all vectors are used as model input in parallel
1: all vectors are added up into one vector, only one vector is used as model input.

Step 8: Use prediction model 30 in operation in plant

Use the model in operation. Each time at least one aggregate is in an internal error state, the model, that was trained in Step 7, is run once for each state change of any aggregate in the line to predict the time to the next bottleneck failure from that point in time. The input of the model is formed by the incoming runtime data from the machines of the line in the same fashion as in 6a and 6b, using the added up embedding vectors of the sentences of the sliding window length, where the last word is the last machine operation status change.
Addition of context information to the above Steps:
There are different factors that can affect production line behavior which can be added to the model:

- the product that is currently produced,
- the product configuration, that is currently set (which is typically dependent on the product),
- the shift of people working and operating the line
- the time of the year (month)
- machine setting or machine setting change information (especially speed setpoints)

This context information can be included into the training by encoding each of the discrete classes into a unique word, that is added to all of the sentence in Step 6, where this class is known to be true.
In one example of the embodiment, the month of the calendar year is added as the first word (January or February etc.), the current shift of the staff working on the production line ("shift1" or "shift2" etc.) is added as the second word to each of the sentences of the training set. This can be left out or represented separately as a word (e. g. unknown-shift'), in cases where the information is missing or unclear (e. g. change of shift).
Example sentences look then like this:

'june'
'shift2'
'packer_o_s',

'zero',
'packer_s_o',
'zero',

'cartonsupply_t_o',
'two',
'cartonsupply_o_t',
'one',
'cartonsupply_t_o',
'two',
'cartonsupply_o_t',
'one',
'cartonsupply_t_o',
'two',
'cartonsupply_o_t',
'one',
'cartonsupply_t_o',
'two',

Additional information, that cannot be expressed into categories, can be mixed into the embedding model simply by adding the used natural words into the vocabulary:

- maintenance information from maintenance logs (human readable text)
- quality information
- recipe information

It is an advantage of the described invention, that the training tasks can easily be understood by Humans, as the tasks are formed by human readable words. The tasks can be mixed and the embedding can be enhanced with human-language NLP tasks easily, so the embedding model can be additionally (in parallel) be used as a backend technology for chatbot conversations as usual. A line operator, e. g. a brewmaster, may ask for current operating states or when the bottleneck will go into stop, as an error just appeared in one aggregate.

Another favorable effect of the described method is that the embedding Model can be easily expanded to include previously unseen information (new machines, new information like shift changes etc.) by simply expanding the vocabulary with new words. The previously learned information is fully usable (because the embedding space size, e. g. number of dimensions, is not affected). Complexity by adding new machines with all possible machine states grows only linearly in the vocabulary

New prediction tasks like predicting the next machine state change or anomaly detection tasks can easily be added to the training tasks directly using the same already trained embedding model as a base model, taking advantage of the dense representation.

Another possible application of the proposend solution is a light stack feedback to the user. A flashing light on the error-causing machine could indicate the operator of a plant an error, with the frequency being proportional to the time to action: quicker change in flashing means for example that less time is left until bottleneck aggregate may go into starvation or tailback. Alternatively a countdown ticker could be displayed at the bottleneck machine or at the root cause machine that causes the error.

**Claims**

1. A computer-implemented method for predicting a production line standstill time for an industrial automation arrangement,

   the production line comprising a number of coupled aggregates (1, 2, 3, 4),
   each aggregate (1, 2, 3, 4) in the production line having one state out of a set of possible statuses at every point of time, and
   one of the aggregates (1, 2, 3, 4) being a bottleneck aggregate determining the throughput of the whole production line responsible for a production line standstill, wherein,
   each consecutive aggregate state change information is identified and stored, containing at least a time information regarding the consecutive state change and the previous state change,
   each consecutive aggregate state change information is translated into a sentence consisting of corresponding words by concatenation, and
   training of a first machine learning model on created training sets based on the sentences to train temporal order and/or semantic meaning of sentences,

converting all sentences into their corresponding embedding vectors for all words in all respective sentences, and training of a second machine learning model to predict the time to bottleneck aggregate standstill based on the input formed by (the vectors converted from each sentence) the output of the first machine learning model, presenting or using the output of the second machine learning model as the predicted time to production standstill.

2. The method according to claim 1,

    **characterized in that**
    the possible status includes at least one of
    Normal Operation,
    Internal Fault,
    Tailback,
    Starvation,
    Initial.

3. The method according to one of the preceding claims, **characterized in**,

    the consecutive aggregate state change information of each aggregate (1, 2, 3, 4) recorded is translated into a corresponding sentence by concatenation containing a unique identification of the aggregate (1, 2, 3, 4), a time information when the state change has taken place, information of first state of the aggregate (1, 2, 3, 4) and information of the second state that the aggregate (1, 2, 3, 4) changed into.

4. The method according to one of the preceding claims, **characterized in,**
    **that** the time information is a word representing
    relative time distance (of relevance) to the sentence, using a translation from absolute time stamps.

5. The method according to one of the preceding claims, **characterized in**,
    the created word of relative time distance is created by calculating the difference and translating into a word by

    - counting upwards or downwards,
    - using fixed time intervals, in particular seconds.

6. The method according to one of the preceding claims, **characterized in, that**
    additional information can be supplemented by adding further words into the vocabulary, in particular information indicating a cause or reason for the state change.

7. The method according to one of the preceding claims, **characterized in, that**
    a fixed number of sentences is generated wherein each number of sentences representing a fixed period of time, whereas the first sentence ends with the internal error of the root-cause aggregate as its last word, and
    the last sentence ends with the starvation or tailback word of the filler aggregate, caused by the root cause from the first sentence, as the last word of the last sentence.

8. The method according to one of the preceding claims, **characterized in, that**
    further prediction is used for next machine state change or anomaly detection.

9. The method according to one of the preceding claims, **characterized in, that**
    pairs of embedding vectors are mathematically added to form new input vectors for the model.

10. The method according to one of the preceding claims, **characterized in, that**
    a prediction task produces information that can be translated into a visual output at the aggregate, indicating at least the error causing aggregate and / or further information about the error, if applicable.

11. A data processing system comprising means for carrying out the steps of the method of any one of the preceding method claims.

12. A computer program product comprising instructions which, when the program is executed by a computer, cause the computer to carry out the steps of the method of any one of the preceding method claims.

FIG 1

# FIG 2

Europäisches
Patentamt

European
Patent Office

Office européen
des brevets

# EUROPEAN SEARCH REPORT

Application Number

EP 21 20 7808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/080941 A1 (ENTZMINGER ROB A [US] ET AL) 18 March 2021 (2021-03-18) * paragraphs [0003] – [0005], [0015] – [0046], [0053]; figures 1-5 * ----- | 1-12 | INV. G05B23/02 G06N20/00 |
| Y | EP 3 223 095 A1 (SIEMENS AG [DE]) 27 September 2017 (2017-09-27) * paragraphs [0001], [0002], [0008] – [0018], [0024] – [0035]; figures 1-4 * ----- | 1-12 | |
| A | US 2021/158220 A1 (LAVID BEN LULU DAVID [IL] ET AL) 27 May 2021 (2021-05-27) * paragraphs [0002], [0005] – [0008], [0012] – [0014], [0023] – [0039], [0045] – [0072]; figures 1,4-6 * ----- | 1-12 | |

TECHNICAL FIELDS
SEARCHED        (IPC)

G06N
G05B

The present search report has been drawn up for all claims

| Place of search | Date of completion of the search | Examiner |
|---|---|---|
| Munich | 8 April 2022 | Postemer, Patricia |

EPO FORM 1503 03.82 (P04C01)

## ANNEX TO THE EUROPEAN SEARCH REPORT
## ON EUROPEAN PATENT APPLICATION NO.

EP 21 20 7808

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2022

| Patent document cited in search report | | Publication date | Patent family member(s) | | Publication date |
|---|---|---|---|---|---|
| US 2021080941 | A1 | 18-03-2021 | NONE | | |
| EP 3223095 | A1 | 27-09-2017 | CN | 108780315 A | 09-11-2018 |
| | | | EP | 3223095 A1 | 27-09-2017 |
| | | | US | 2019204820 A1 | 04-07-2019 |
| | | | WO | 2017162434 A1 | 28-09-2017 |
| US 2021158220 | A1 | 27-05-2021 | BR | 112021002574 A2 | 04-05-2021 |
| | | | CN | 112534371 A | 19-03-2021 |
| | | | DE | 112019003588 T5 | 15-07-2021 |
| | | | US | 2021158220 A1 | 27-05-2021 |
| | | | WO | 2020036851 A1 | 20-02-2020 |

EPO FORM P0459

For more details about this annex : see Official Journal of the European Patent Office, No. 12/82

**EP 4 180 888 A1**

**Patent documents cited in the description**

- EP 2021071128 W